# FASCICULE DE BREVET EUROPEEN

(11) **EP 1 817 890 B1**
(45) Date de publication et mention de la délivrance du brevet: **02.04.2008**
(21) Numéro de dépôt: 05803085.9
(22) Date de dépôt: 14.11.2005
(51) Int. Cl.: H04L 29/08, G06K 7/00, G07F 7/10, G06K 19/07

(54) **PROCEDE, SYSTEME ET CARTE A MICROCONTROLEUR POUR LA COMMUNICATION DE SERVICES D'APPLICATION DEPUIS UNE CARTE A MICROCONTROLEUR VERS UN TERMINAL**
VERFAHREN, SYSTEM UND MIKROCONTROLLERKARTE ZUR KOMMUNIKATION VON ANWENDUNGSDIENSTEN VON EINER MIKROCONTROLLERKARTE ZU EINEM ENDGERÄT
METHOD, SYSTEM AND MICROCONTROLLER CARD FOR COMMUNICATING APPLICATION SERVICES FROM A MICROCONTROLLER CARD TO A TERMINAL

(30) Priorité: 30.11.2004 FR 0412702
(43) Date de publication de la demande: 15.08.2007
(73) Titulaire: GEMPLUS, 13420 Gémenos (FR)
(72) Inventeur: FOESSER, Christophe, F-La Ciotat 13600 (FR)
(86) Numéro de dépôt international: PCT/EP2005/055967
(87) Numéro de publication internationale: WO 2006/058839

(56) Documents cités:
- WO-A-00/69183
- US-A- 6 157 966
- US-A1- 2004 232 247

## Description

La présente invention concerne la communication de services relatifs à une application mémorisée dans une carte à microcontrôleur dite également carte à puce ou carte à circuit intégré, vers un terminal.
Le terminal accueille la carte à puce et peut être, selon un premier exemple, un terminal radio mobile pour lequel la carte à puce est du type UICC (Universal Integrated Circuit Card). La carte à puce est par exemple une carte SIM (Subscriber Identity Module) pour un réseau de radiocommunication cellulaire du type GSM, ou un module d'identité USIM pour un réseau à accès multiple à répartition par codes CDMA (Coded Division Multiple Access) de la troisième génération (3GPP) du type UMTS (Universal Mobile Telecommunications System). Selon d'autres exemples, le terminal peut être un terminal bancaire accueillant une carte de débit ou de crédit, ou un ordinateur personnel (PC) doté d'un lecteur de carte à puce, ou bien un petit équipement communicant tel qu'un assistant numérique personnel (PDA) pouvant lire une carte à puce introduite dans celui-ci.

De façon générale une carte à microcontrôleur, implémentant une ou plusieurs applications liées chacune à un ou plusieurs services ne peut pas transmettre directement au terminal des données relatives aux services proposés par une application. La liaison entre le terminal et la carte est une liaison maître-esclave dans laquelle le terminal est le maître et la carte l'esclave. Les données entre la carte et le terminal sont échangées selon un protocole de communication dédié conforme à la norme ISO 7816-3. La carte utilise un mécanisme du type pro-actif afin de déclencher des actions dans le terminal qui interroge périodiquement la carte.
Dans ce type de liaison, le terminal découvre lui-même les services qui sont susceptibles d'être offerts par la carte. Puis la carte doit attendre une commande du terminal concernant le service de l'application que le terminal souhaite utiliser, pour transmettre au terminal les données de ce service mémorisées dans la carte. La commande du terminal est établie sous la commande de l'usager du terminal, ou d'une entité du monde extérieur à la carte connectée au terminal.

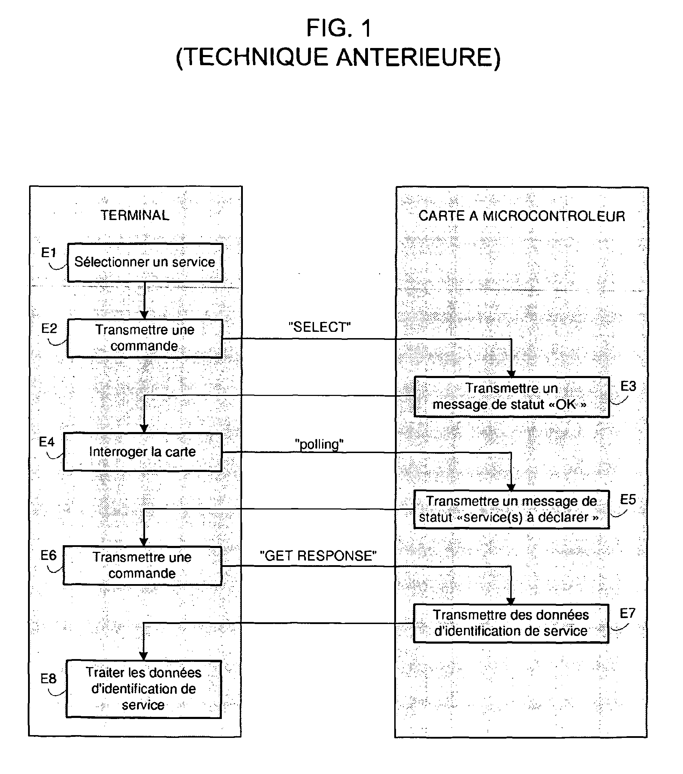

Comme montré à la figure 1, un procédé de communication de service connu entre la carte et le terminal comprend des étapes E1 à E8.
La première étape E1 indique qu'un utilisateur du terminal ou le terminal lui-même, dans lequel est insérée la carte à microcontrôleur, désire accéder à un service d'une application mémorisée dans la carte. Le terminal en tant que client transmet à la carte une commande pour sélectionner l'application à l'étape E2. Cette commande est par exemple la commande normalisée "SELECT". A la suite de la commande, la carte transmet au terminal un message de statut acquittant la commande du terminal à l'étape E3. Ce premier message de statut comprend uniquement des champs d'en-tête ; par exemple, le premier message inclut deux octets indiquant avec succès que l'application existe dans la carte, ou l'échec de la commande du terminal signalant une anomalie ou l'absence de l'application dans la carte. Le premier message de statut est par exemple la valeur hexadécimale 0x9000 selon la norme ISO 7816. Le message ne comprend pas de champ de données à transmettre vers le terminal tant que ce dernier ne l'a pas demandé. A l'étape suivante E4, le terminal interroge (polling) périodiquement la carte sur son statut, par exemple tous les 500 ms. Si la carte souhaite transmettre des données au terminal, la carte lui transmet, lors de l'étape E5, un deuxième message de statut qui signale que la carte possède un ou plusieurs services à déclarer en relation avec l'application. Le deuxième message de statut est par exemple la valeur hexadécimale 0x61xx selon la norme ISO 7816. En réception de ce message, le terminal transmet à la carte une commande invitant la carte à transmettre des données identifiant le ou les services de l'application, à l'étape E6. Cette commande est par exemple la commande normalisée ISO 7816 "GET RESPONSE". Puis à l'étape E7, la carte transmet des données d'identification du ou des services dans un ou plusieurs messages ayant un entête de statut.

Tant que les données d'identification de service ne sont pas divulguées au terminal, la carte ne peut dispenser le ou les services de l'application. Une fois que ces données sont transmises au terminal, la carte ne les transmet plus jusqu'à une nouvelle mise à jour (reset) du ou des services de l'application.
Ce procédé nécessite plusieurs étapes de commande et réponse E2 à E7 entre le terminal et la carte pour que la carte transmette des données relatives aux services d'une application au terminal. Les étapes intermédiaires E3 à E6 diffèrent la communication des données de service de la carte vers le terminal et plus généralement vers le monde extérieur à la carte. Si l'application offre de nombreux services, plusieurs messages sont bien souvent nécessaires pour identifier les services ce qui diffère d'autant plus la communication des données.

Selon un autre procédé connu implémenté dans des systèmes bancaires, des applications disponibles sont communiquées par une carte à microcontrôleur de type EMV vers un terminal. Tout comme le procédé précédent, ce procédé nécessite plusieurs échanges de commande et réponse entre le terminal et la carte pour que la carte transmette des données relatives aux applications au terminal.

L'invention a pour **objectif** de réduire dans une carte à microcontrôleur le temps d'accès aux données de service d'application par un terminal et ainsi de communiquer rapidement des services depuis la carte vers le monde extérieur à celle-ci.

Pour atteindre cet objectif, un procédé pour communiquer un ou plusieurs services d'une application mémorisée dans une carte à microcontrôleur vers un terminal, selon lequel immédiatement après chaque sélection de l'application, le terminal transmet une commande de sélection identifiant l'application sélectionnée à la carte, est caractérisé en ce qu'il comprend dans la carte une sélection de services actifs parmi des services liés à l'application, à la suite de la commande de sélection, afin de construire dynamiquement une liste de données d'identification des services actifs, et une transmission d'un message de réponse incluant les données d'identification des services actifs depuis la carte vers le terminal.

Au sens de l'invention, une application est liée à un service ou plusieurs services.
Le procédé de l'invention permet un échange direct de données de type commande - réponse dans les deux sens entre le terminal et la carte, ce qui est impossible dans le système connu présenté précédemment .
Les données d'identification relatives à des services d'une application mémorisée dans la carte à microcontrôleur sont ainsi transmises immédiatement vers le terminal sans que ce dernier n'ait à envoyer de commandes pour découvrir un seul service à la fois.
L'utilisateur du terminal prend connaissance de tous les services proposés par une même application par le biais d'une seule commande.
Le procédé de l'invention comporte ainsi un nombre minimum d'étapes d'échange entre la carte et le terminal pour transmettre des données de la carte vers le terminal. Le procédé connu, précédemment présenté, exécute cinq étapes d'échange entre la carte et le terminal avant que la carte puisse transférer des données au terminal.

Selon une caractéristique de l'invention, le procédé comprend lors de la sélection des services actifs liés à l'application, une vérification de l'activité des services de manière à détecter les services actifs et lire les données d'identification des services actifs pour construire dynamiquement la liste.
Selon une autre caractéristique de l'invention, après la transmission d'un message de réponse incluant des données d'identification des services actifs liés à l'application depuis la carte vers le terminal est prévue une analyse desdites données d'identification pour communiquer les services actifs liés à l'application identifiés par les données d'identification.

L'invention a aussi pour objet un système pour communiquer un ou plusieurs services d'une application mémorisée dans une carte à microcontrôleur vers un terminal, le terminal transmettant une commande de sélection identifiant l'application sélectionnée à la carte immédiatement après chaque sélection de l'application. Le système est caractérisé en ce que la carte comprend un moyen pour sélectionner des services actifs parmi des services liés à l'application, à la suite de la commande de sélection, afin de construire dynamiquement une liste de données d'identification des services actifs et de transmettre un message de réponse incluant les données d'identification des services actifs depuis la carte vers le terminal.
De préférence, le terminal comprend un moyen pour analyser les données d'identification du message de réponse afin de communiquer les services actifs liés à l'application et identifiés par les données d'identification.
Les éléments que sont le moyen pour sélectionner et le moyen pour analyser permettent un échange direct de données dans les deux sens de type commande - réponse, ce qui n'est pas possible dans le système de communication connu présenté précédemment.
Le moyen pour sélectionner des services actifs accède de manière indirecte aux différents services de l'application sélectionnée par le terminal, évitant ainsi à l'utilisateur du terminal ou au terminal lui-même de faire de multiples recherches et commandes vers la carte pour chaque service ou groupe de services d'une application. Le terminal peut en réponse à une commande recevoir les données d'identification de tous les services d'une seule application mémorisée dans la carte.

Selon une autre caractéristique de l'invention, le message de réponse comporte deux premiers champs d'en-tête indiquant l'éventuelle présence d'autres champs, un troisième champ indiquant la longueur d'un quatrième champ, et le quatrième champ incluant les données d'identification des services actifs liés à l'application sélectionnée.
Le terminal accède ainsi directement aux applications et indirectement aux services liés à chaque application.

L'invention se rapporte encore à une carte à microcontrôleur pour communiquer un ou plusieurs services d'une application vers un terminal ayant transmis une commande de sélection identifiant l'application à la carte immédiatement après chaque sélection de l'application. La carte est caractérisée en ce qu'elle comprend un moyen pour sélectionner des services actifs parmi des services liés à l'application, à la suite de la commande de sélection, afin de construire dynamiquement une liste de données d'identification des services actifs et de transmettre un message de réponse incluant les données d'identification des services actifs vers le terminal.

Selon une autre caractéristique de la carte, elle comporte une première couche logicielle dédiée aux applications mémorisées dans la carte, et une deuxième couche logicielle dédiée aux services mémorisés dans la carte, chaque application et chaque service comportant une interface pour interfacer les applications et les services ayant un format commun.

D'autres caractéristiques et avantages de la présente invention apparaîtront plus clairement à la lecture de la description suivante d'une réalisation préférée de l'invention, donnée à titre d'exemple non limitatif, en référence aux dessins annexés correspondants dans lesquels :
- la figure 1, déjà commentée est un algorithme du procédé connu de communication de service ;
- la figure 2 est un bloc-diagramme d'un système de communication de service d'application selon une réalisation de l'invention ;
- les figures 3 et 4 illustrent l'interfaçage liant des applications et des services de l'invention ;
- la figure 5 montre un message de réponse partiellement propriétaire selon une réalisation de l'invention ; et
- la figure 6 est un algorithme d'un procédé de communication de service d'application selon une réalisation de l'invention.

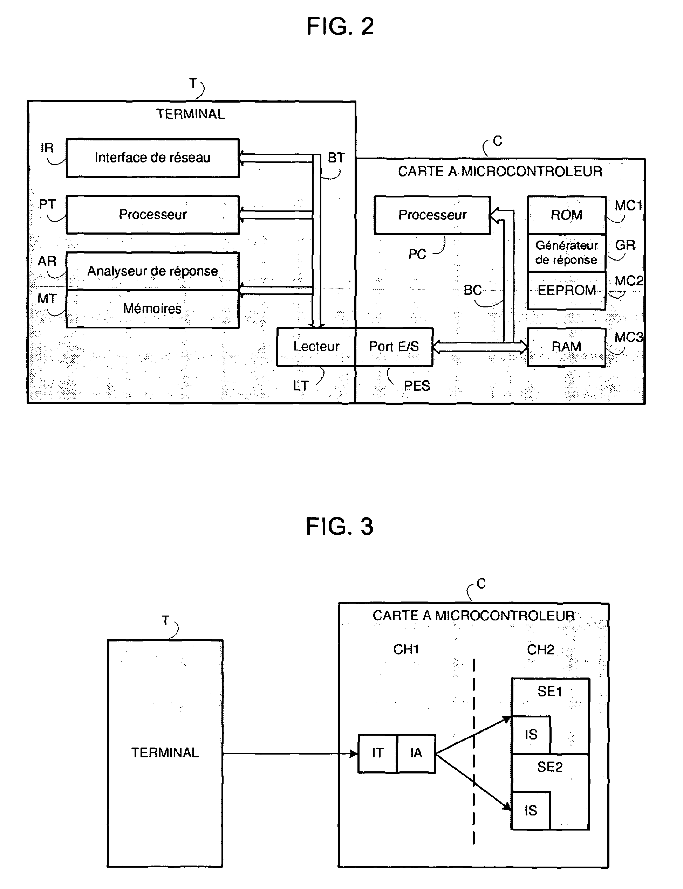

En référence à la figure 2, **un système de communication** selon l'invention comprend au moins un terminal T et une carte à microcontrôleur C.

Le terminal T comprend un processeur PT, des mémoires MT et un lecteur de carte à microcontrôleur LT. Le lecteur LT accueille au moins partiellement la carte à microcontrôleur avec ou sans contact électrique. Le terminal T peut comprendre également une interface réseau IR, pour communiquer avec le monde extérieur. Par exemple, l'interface réseau est une interface radio lorsque le terminal est un mobile dans un réseau de radiocommunication cellulaire numérique du type GSM ou UMTS. Selon un autre exemple, l'interface réseau inclut un modem pour communiquer avec un serveur web à travers l'internet, ou avec un serveur privé via une liaison louée ou spécialisée. Les différents éléments du terminal sont reliés entre eux par un bus bidirectionnel BT. Le terminal T comprend sous forme de module logiciel un analyseur de réponse AR inclut dans les mémoires MT. L'analyseur AR décode et analyse un message transmis par la carte à microcontrôleur C incluant des données de services d'application mémorisées dans la carte C.

Comme il est connu, la carte à microcontrôleur C, également appelée carte à puce ou carte à circuit intégré, comprend principalement un processeur PC, trois mémoires MC1 à MC3 et un port d'entrée/sortie PES connectable au lecteur LT, avec ou sans contact électrique, pour échanger des commandes et réponses entre le terminal T et la carte C. Les différents éléments de la carte sont reliés entre eux par un bus bidirectionnel BC.

La mémoire M1 est du type ROM et inclut le système d'exploitation de la carte et une machine virtuelle sur lequel s'appuie le système d'exploitation. Des algorithmes d'authentification, de communication et d'application sont implémentés dans la mémoire M1. La mémoire M2 est une mémoire non volatile de type EEPROM contenant des caractéristiques liées à l'usager telles qu'un identificateur d'un usager possédant la carte, un profil d'abonnement, un code confidentiel, etc. La mémoire M3 est une mémoire RAM servant au traitement des données à échanger entre le processeur PC de la carte C et le processeur PT inclus dans le terminal T.
Selon l'invention, un générateur de réponse GR est inclus sous forme de module logiciel dans les mémoires MC1 et MC2. Le générateur de réponse vérifie l'activité de services liés à une application, préalablement sélectionnée par le terminal T afin de construire dynamiquement une liste de données d'identification des services actifs. Le générateur de-réponse GR met en forme également un message de réponse à transmettre au terminal T, incluant la liste des données d'identification des services actifs liés à l'application.

La carte de préférence multi-applicative inclut une machine virtuelle qui peut être de technologie Javacard et commandée par le processeur de la carte à microcontrôleur C. Chaque application est alors une applet qui interroge, par l'intermédiaire de l'interfaçage, un ou plusieurs services respectifs selon la demande d'un utilisateur extérieur par exemple via le clavier du terminal T, en tant que terminal bancaire ou terminal mobile, connecté à la carte à microcontrôleur.

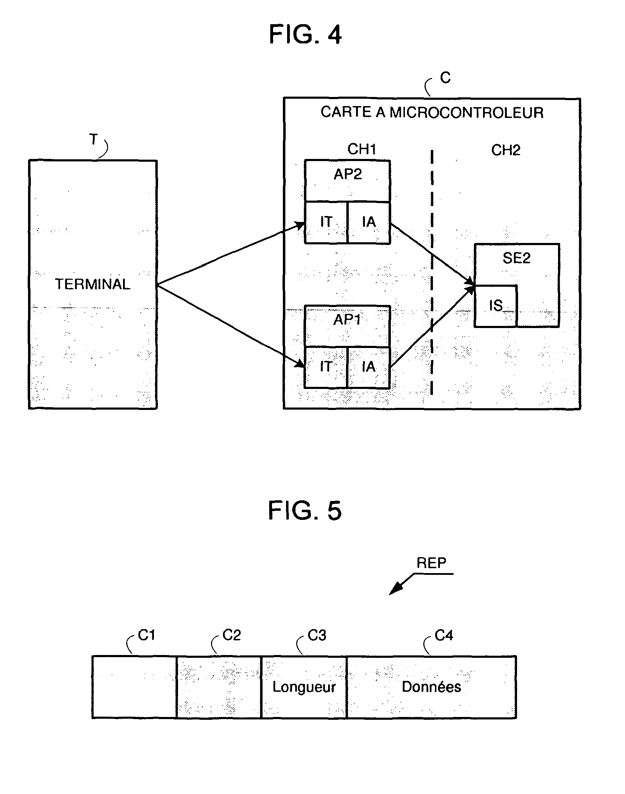

Comme représenté aux figures 3 et 4, l'architecture logicielle de la carte C comprend deux couches logicielles CH1 et CH2. La première couche CH1 est dédiée aux applications AP mémorisées dans la carte. Chaque application inclut une interface IT pour s'interfacer au moyen de commandes et de réponses directement avec le terminal T, ou via le terminal avec une entité extérieure à la carte. La deuxième couche CH2 est dédiée aux services SE mémorisés dans la carte. Les données d'identification d'un service lié informatiquement à une application constituent un sous-identificateur d'un identificateur de l'application.
Le terminal T ou une entité extérieure accède indirectement aux services liés à une application préalablement sélectionnée par l'intermédiaire de ladite application et du générateur de réponse. Des interfaces IA et IS sont respectivement prévues dans chaque service SE et chaque application AP pour interfacer des services SE et des applications AP ayant un format commun de connexion. Selon la figure 3, une application AP est liée à deux services SE1 et SE2. Lorsqu'un nouveau service SE doit être installé dans la carte C, il est déclaré auprès d'une ou plusieurs applications AP1, AP2 ayant un format en commun avec le service, par l'intermédiaire des interfaces respectives IA et IS desdites applications et dudit service, comme montré à la figure 4.
Les interfaces IA et IS aiguillent le générateur de réponse GR vers les services liés à une application. En référence à la figure 3, un ou plusieurs services SE1, SE2 interfacés à une application AP sont activés et désactivés par des commandes provenant du terminal ou d'une entité extérieure, ou bien par l'application elle-même. L'activation, l'inactivation, l'installation, la désinstallation, l'adjonction et l'effacement de services par rapport à une ou plusieurs applications évoluent dynamiquement au cours d'une session entre la carte et le terminal.

Pour une meilleure compréhension de l'invention, plusieurs implantations d'applications (applets) avec leurs services associés sont présentées ci-dessous. La carte à microcontrôleur peut proposer différents types d'applications indépendantes ou non les unes des autres et mémorisées dans la carte C.

Dans une première réalisation, plusieurs applications indépendantes mémorisées dans la carte à microcontrôleur proposent chacune un unique service. Par exemple, une application de carte bancaire gère un service de gestion de compte bancaire et une application de porte-monnaie électronique gère un service de gestion de porte monnaie. Ces services sont souvent intégrés directement dans leurs applications. Dans un autre exemple, l'une des applications dispense un accès sécurisé à un ordinateur personnel, et l'autre un accès sécurisé à un local.
Selon une deuxième réalisation illustrée à la figure 3, une unique application de service internet AP est implémentée dans la carte à microcontrôleur et gère un service de fournisseur de pages web non sécurisées SE1 et un service de fournisseur de pages web sécurisées SE2. Dans un autre exemple, une application gère plusieurs comptes d'utilisateurs respectivement selon plusieurs services différents dans la carte.
Selon une troisième réalisation, illustrée à la figure 4, un service commun SE est dispensé par plusieurs applications AP1, AP2 différentes implémentées dans la carte à microcontrôleur. Par exemple, des sociétés partenaires accèdent chacune à une application de fidélité. Ces applications de fidélité proposent un même service de gestion de point de fidélité. Selon un autre exemple un service pour crypter une signature électronique avec des données personnelles du porteur de la carte est accessible par plusieurs applications à condition qu'elles y soient autorisées par un serveur de certification via une liaison à travers le terminal.

La figure 5 illustre la structure **d'un message** de réponse REP transmis par la carte C au terminal T. Le message est partiellement propriétaire et comporte quatre champs C1 à C4. Les deux premiers champs C1 et C2 constituent l'en-tête du message. Le troisième champ C3 indique la longueur des données à transmettre. Le quatrième champ C4 comprend des données d'identification de services actifs à transmettre au terminal T. Les données incluent des informations d'identification ou une liste récapitulative de la totalité des services actifs liés à une application désignée dans une commande préalable du terminal.
Le message de réponse REP selon l'invention recourt par exemple à la norme ISO 7816 concernant les cartes d'identification et les cartes à circuit intégré sans modifier la structure matérielle des terminaux et des cartes.
Les deux premiers champs C1 et C2 sont normalisés et décrivent le contenu des champs suivant C3 et C4. Par exemple, une commande de sélection demandée préalablement par le terminal nécessite en retour des données ayant un format de fichier. Selon un autre exemple, la valeur hexadécimale 0x85 de la norme ISO 7816 indique que la carte transmet des données n'ayant aucun rapport avec le format de fichier en réponse à la commande du terminal. Les troisième et quatrième champs C3 et C4 du message sont des champs propriétaires qui incluent par exemple des numéros de port ou adresses identifiant des services d'une application bancaire préalablement sélectionnée par le terminal. Lorsque la valeur hexadécimale de l'identificateur d'un premier service est Ox2760 et la valeur de l'identificateur d'un deuxième service est Ox27CB, le message de réponse REP est le suivant :

| C1 | C2 | C3 | C4 |
|---|---|---|---|
| 0x62 | 0x85 | 0x04 | 0x27 0x60 0x27 0xCB |

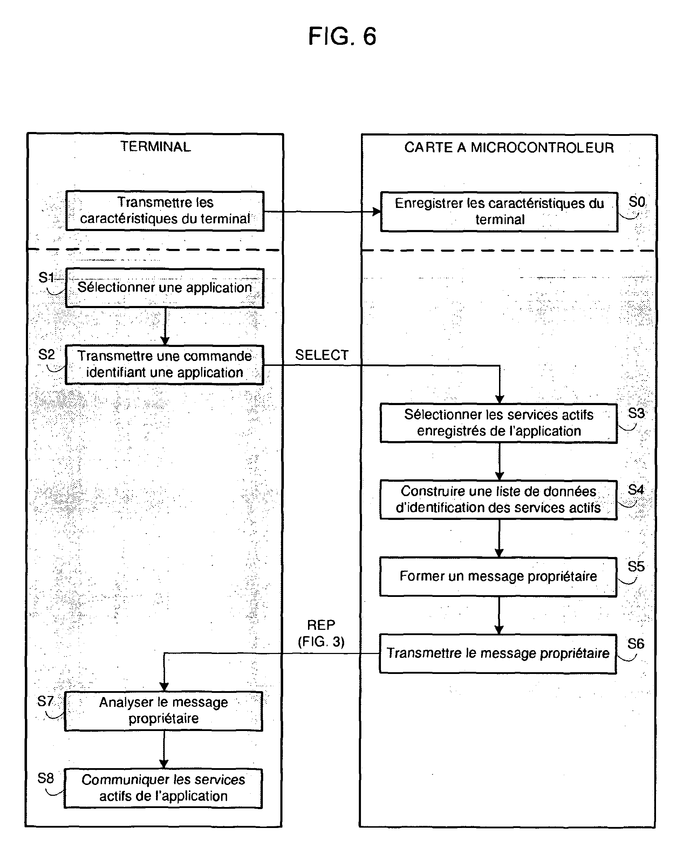

En se référant maintenant à la figure 6, le **procédé de communication** selon l'invention comporte des étapes S1 à S8. Le procédé est mis en oeuvre à la fois dans le terminal T et la carte à microcontrôleur C pour communiquer tous les services liés à une application, les services et l'application étant mémorisés au moins dans la mémoire MC2 de la carte à microcontrôleur C. Le procédé de communication de services est déclenché lors de la sélection de l'application par le terminal. Cette sélection peut résulter d'une initialisation ou d'une actualisation de l'application et/ou d'au moins l'un des services de celle-ci dans la carte. Après la sélection, la carte transmet au terminal des données d'identification de tous les services actifs de l'application jusqu'à une prochaine sélection de l'application.
A l'étape S1, l'utilisateur du terminal, ou toute entité cliente autorisée à travers le terminal sélectionne par exemple au moyen d'un formulaire ou d'une page d'accès une application mémorisée dans la carte C. Le terminal T établit ensuite une commande SELECT pour identifier et interroger l'application sélectionnée. La commande SELECT est transmise depuis le terminal T à la carte C à travers le lecteur LT et le port d'entrée/sortie PES à l'étape S2.
Après réception de la commande SELECT, le générateur de réponse GR sélectionne à l'étape S3 les services actifs parmi les services inactifs et actifs enregistrés dans la mémoire MC2 de la carte et liés à l'application dans, afin de construire dynamiquement à l'étape S4 une liste de données d'identification desdits services actifs. La sélection des services actifs comprend une vérification de l'activité des services liés à l'application de manière à détecter les services actifs, par exemple en lisant l'état d'un bit indicateur d'activité/inactivité associé aux données d'identification de chaque service dans la mémoire MC2, et à lire les données d'identification des services actifs. Le générateur de réponse GR construit dynamiquement la liste avec les données d'identification des services actifs et enregistre la liste construite dans la mémoire MC2.
Lors de l'étape S5, le générateur de réponse forme un message de réponse partiellement propriétaire REP, tel que décrit en référence à la figure 5, comprenant les données d'identification de tous les services actifs de l'application sélectionnée incluses dans la liste précédemment construite. Puis la carte C transmet à l'étape S6 le message de réponse REP vers le terminal T par le biais du port d'entrée/sortie PES et du lecteur LT à l'analyseur de réponse AR dans le terminal T.
L'analyseur AR analyse le message de réponse REP pour extraire et décoder les données d'identification de tous les services de l'application sélectionnée à l'étape S7. Finalement à l'étape S8, les données d'identification des services actifs de l'application sélectionnée sont communiquées en les mémorisant dans les mémoires MT du terminal T et/ou les transmettant à des entités autorisées via l'interface de réseau IR.
Le générateur de réponse GR intégré dans la carte C et l'analyseur de réponse AR intégré dans le terminal T contribuent au transfert direct selon l'invention d'une commande avec interrogation d'une application depuis le terminal vers la carte et d'une réponse avec l'identification du ou des services actifs de l'application sélectionnée depuis la carte vers le terminal. De plus, le générateur de réponse GR dans la carte contribue avec l'application à aiguiller la commande pour chaque application sélectionnée afin d'accéder indirectement aux services de l'application à la suite d'une commande du terminal.

En variante du procédé de l'invention, lors de la construction de la liste dynamique par le générateur de réponse GR de la carte, certaines données d'identification des services actifs liés à l'application sélectionnée par le terminal et intransmissibles au terminal peuvent être masquées dans la liste selon des caractéristiques matérielles, logicielles ou de comportement du terminal ou d'une entité extérieure. Ces caractéristiques sont préalablement connues par la carte qui les enregistre par exemple lors de l'ouverture d'une session de communication 50 entre le terminal et la carte, comme montré en haut de la figure 6.
Par exemple, les caractéristiques du terminal sont relatives aux caractéristiques de l'interface d'usager concernant l'écran du terminal, ou de périphériques spécifiques tels qu'une imprimante. Selon un autre exemple relatif à des caractéristiques de comportement, une application interdit de communiquer un service actif, tel qu'un service d'ouverture d'une page web sécurisée, à un terminal si le terminal est peu sécurisé.

## Revendications

1. - Procédé pour communiquer un ou plusieurs services d'une application mémorisée dans une carte à microcontrôleur (C) vers un terminal (T), selon lequel immédiatement après chaque sélection (S1) de l'application, le terminal (T) transmet (S2) une commande de sélection (SELECT) identifiant l'application sélectionnée à la carte (C), **caractérisé en ce qu'**il comprend dans la carte une sélection (S3) de services actifs parmi des services liés à l'application, à la suite de la commande de sélection (SELECT), afin de construire dynamiquement (S4) une liste de données d'identification des services actifs, et une transmission (S6) d'un message de réponse (REP) incluant les données d'identification des services actifs depuis la carte vers le terminal.

2. - Procédé conforme à la revendication 1, selon lequel la sélection (S3) de services actifs liés à l'application comprend une vérification de l'activité des services de manière à détecter les services actifs et lire les données d'identification des services actifs pour construire dynamiquement la liste.

3. - Procédé conforme à la revendication 1 ou 2, comprenant, après la transmission (S6) d'un message de réponse (REP) incluant les données d'identification des services actifs liés à l'application depuis la carte vers le terminal, une analyse (S7) desdites données d'identification pour communiquer (S8) les services actifs liés à l'application identifiés par les données d'identification.

4. - Procédé conforme à l'une quelconque des revendications 1 à 3, selon lequel la liste de données d'identification des services actifs est construite en fonction de caractéristiques du terminal préalablement connues par la carte en masquant dans ladite liste les données d'identification de services actifs intransmissibles au terminal.

5. - Système pour communiquer un ou plusieurs services d'une application mémorisée dans une carte à microcontrôleur (C) vers un terminal (T), le terminal (T) étant apte à transmettre une commande de sélection (SELECT) identifiant l'application sélectionnée à la carte (C) immédiatement après chaque sélection de l'application, **caractérisé en ce que** la carte (C) comprend un moyen (GR) pour sélectionner des services actifs parmi des services liés à l'application, à la suite de la commande de sélection (SELECT), afin de construire dynamiquement une liste de données d'identification des services actifs et de transmettre un message de réponse (REP) incluant les données d'identification des services actifs depuis la carte (C) vers le terminal (T).

6. - Système conforme à la revendication 5, dans lequel le terminal (T) comprend un moyen (AR) pour analyser les données d'identification du message de réponse (REP) afin de communiquer les services actifs liés à l'application et identifiés par les données d'identification.

7. - Système conforme à la revendication 5 ou 6, dans lequel le message de réponse (REP) comporte deux premiers champs - d'en-tête (C1, C2) indiquant l'éventuelle présence d'autres champs (C3, C4), un troisième champ (C3) indiquant la longueur d'un quatrième champ, et un quatrième champ (C4) incluant les données d'identification des services actifs liés à l'application sélectionnée.

8. - Système conforme à l'une quelconque des revendications 5 à 7, dans lequel une ou plusieurs applications (AP1, AP2) sont liées à un service (SE).

9. - Carte à microcontrôleur (C) pour communiquer un ou plusieurs services d'une application vers un terminal (T) ayant transmis une commande de sélection (SELECT) identifiant l'application à la carte (C) immédiatement après chaque sélection de l'application, **caractérisée en ce qu'**elle comprend un moyen (GR) pour sélectionner des services actifs parmi des services liés à l'application, à la suite de la commande de sélection (SELECT), afin de construire dynamiquement une liste de données d'identification des services actifs et de transmettre un message de réponse (REP) incluant les données d'identification des services actifs vers le terminal (T).

10. - Carte à microcontrôleur conforme à la revendication 9, comportant une première couche logicielle (CH1) dédiée aux applications (AP) mémorisées dans la carte, et une deuxième couche logicielle (CH2) dédiée aux services (SE) mémorisés dans la carte, chaque application et chaque service comportant une interface (IA, IS) pour interfacer les applications et les services ayant un format commun.

## Claims

1. A method for communicating one or several services of an application stored in a microcontroller card (C) to a terminal (T), wherein immediately after each selection (S1) of the application, the terminal (T) transmits (S2) a selection command (SELECT) identifying the application selected to the card (C), **characterised in that** it includes in the card a selection (S3) of active services among services connected to the application, further to the selection command (SELECT), in order to dynamically set up (S4) a list of identification data of the active services and a transmission (S6) of a response message (REP) including the identification data of the active services from the card to the terminal.

2. - A method according to claim 1, wherein the selection (S3) of active services connected to the application includes a checking of the activity of the services in order to detect the active services and read the identification data of the active services in order to dynamically set up the list.

3. - A method according to claim 1 or 2 including after the transmission (S6) of a response message (REP) including the identification data of the active services connected to the application from the card to the terminal, an analysis (S7) of said identification data for communicating (S8) the active services connected to the application identified by the identification data.

4. - A method according to any one of claims 1 to 3, wherein the list of identification data of the active services is set up according to the characteristics of the terminal which are previously known by the card by masking in said list the identification data of the active services which cannot be transmitted to the terminal.

5. - A system for communicating one or several services of an application stored in a microcontroller card (C) to a terminal (T), the terminal (T) being capable of transmitting a selection command (SELECT) identifying the application selected to the card (C) immediately after each selection of the application, **characterised in that** the card (C) includes means (GR) for selecting actives services among services connected to the application, further to the selection command (SELECT) in order to dynamically set up a list of identification data of active services and to transmit a response message (REP) including the identification data of the active services from the card (C) to the terminal (T).

6. - A system according to claim 5, wherein the terminal (T) includes means (AR) for analysing the identification data of the response message (REP) in order to communicate the active services connected to the application and identified by the identification data.

7. - A system according to claim 5 or 6, wherein the response message (REP) includes two first heading fields (C1, C2) indicating the presence of other fields (C3, C9) if any, a third field (C3) indicating the length of a fourth field, and a fourth field (C4) including the identification data of the active services connected to the selected application.

8. - A system according to anyone of claims 5 to 7, wherein one or several applications (AP1, AP2) are connected to service (SE).

9. - A microcontroller card (C) for communicating one or several services of an application to a terminal (T) having transmitted a selection command (SELECT) identifying the application at the card (C) immediately after each selection of the application, **characterised in that** it includes means (GR) for selecting active services among services connected to the application, further to the selection command (SELECT) in order to dynamically set up a list of identification data of active services and transmit a response message (REP) including the identification data of the active services to the terminal (T).

10. - A microcontroller card according to claim 9, including a first software layer (CH1) dedicated to the applications (AP) stored in the card, and a second software layer (CH2) dedicated to the services (SE) stored in the card, each application and each service including an interface (IA, IS) for interfacing the applications and the services having a common format.

## Patentansprüche

1. Verfahren für die Übermittlung von einem oder mehrerer Dienste einer in einer Mikrorechnerkarte (C) gespeicherten Applikation an ein Terminal (T), bei dem das Terminal (T) sofort nach jeder Wahl (81) der Applikation an die Karte (C) einen die gewählte Applikation identifizierenden Wahlbefehl (SELECT) überträgt, **dadurch gekennzeichnet, dass** es in der Karte eine Wahl von aktiven Diensten unter mit der Applikation verbundenen Diensten umfasst, nach dem Wahlbefehl (SELECT), um dynamisch (S4) eine Identifikationsdatenliste der aktiven Dienste zu erstellen, und eine Übertragung (S6) von der Karte zum Terminal einer Antwortnachricht (REP) die die Identifikationsdaten der aktiven Dienste umfasst.

2. Verfahren gemäß Anspruch 1, bei dem die Wahl (93) der mit der Applikation verbundenen aktiven Dienste eine Prüfung der Aktivität der Dienste umfasst, um die aktiven Dienste zu ermitteln und die Identifikationsdaten der aktiven Dienste zu lesen, um die Liste dynamisch zu erstellen.

3. Verfahren gemäß Anspruch 1 oder 2, das nach der Übertragung (S6) einer Antwortnachricht (REP) mit den Identifikationsdaten der mit der Applikation verbundenen aktiven Dienste von der Karte zum Terminal eine Analyse (S7) der genannten Identifikationsdaten umfasst, um die von den Identifikationsdaten identifizierten, mit der Applikation verbundenen aktiven, Dienste zu übermitteln.

4. Verfahren gemäß einem der Ansprüche 1 bis 3, bei dem die Liste der Identifikationsdaten der aktiven Dienste entsprechend Merkmalen des Terminals erstellt wird, die der Karte vorher bekennt sind, durch Maskierung in der genannten Liste der nicht an das Terminal übertragbaren Identifikationsdaten aktiver Dienste

5. System für die Übermittlung von einem oder mehrerer Dienste einer in einer Mikrorechnerkarte (C) gespeicherten Applikation an ein Terminal (T), bei dem das Terminal (T) sofort nach jeder Wahl der Applikation an die Karte (C) einen die gewählte Applikation identifizierenden Wahlbefehl (SELECT) übertragen kann, **dadurch gekennzeichnet, dass** die genannte Karte (C) ein Mittel umfasst, um aktive Dienste unter mit der Applikation verbundenen Diensten zu wählen, nach dem Wahlbefehl (SELECT), um dynamisch eine Identifikationsdatenliste der aktiven. Dienste zu erstellen und eine Antwortnachricht (REP) von der Karte (C) zum Terminal (T) zu übertragen, die die Identifikationsdaten der aktiven Dienste umfasst.

6. System gemäß Anspruch 5, bei dem das Terminal (T) ein Mittel (AR) umfasst, um die Identifikationsdaten der Antwortnachricht (REP) zu analysieren, um die mit der Applikation verbundenen und von den Identifikationsdaten identifizierten aktiven Dienste zu übermitteln.

7. System gemäß Anspruch 5 oder 6, bei dem die Antwortnachricht (REP) zwei Kopffelder (C1, C2) umfasst, die die eventuelle Präsenz anderer Felder (C3, C4) angeben, ein drittes Feld (C3), das die Länge eines vierten Felds angibt, und ein viertes Feld (C4), das die Identifikationsdaten der mit der gewählten Applikation verbundenen aktiven Dienste enthält.

8. System gemäß einem der Ansprüche 5 bis 7, bei dem eine oder mehrere Applikationen (AP1, AP2) mit einem Dienst (SE) verbunden sind.

9. Mikrorechnerkarte (C) für die Übermittlung von einem oder mehrerer Dienste einer Applikation an ein Terminal (T), das sofort nach jeder Wahl der Applikation an, die Karte (C) einen die gewählte Applikation identifizierenden Wahlbefehl (SELECT) übertragen hat, **dadurch gekennzeichnet, dass** sie ein Mittel (GR) umfasst, um aktive Dienste unter mit der Applikation verbundenen Diensten zu wählen, nach dem Wahlbefehl (SELECT), um dynamisch eine Identifikationsdatenliste der aktiven Dienste zu erstellen und eine Antwortnachricht (REP) zum Terminal (T) zu übertragen, die die Identifikationsdaten der aktiven Dienste umfasst.

10. Mikrorechnerkarte gemäß Anspruch 9, mit einer
ersten Softwareschicht (CH1), die den in der Karte gespeicherten Applikationen (AP) gewidmet ist, und einer zweiten Softwareschicht (CH2), die den in der Karte gespeicherten Diensten (SE) gewidmet ist, wobei jede Applikation und jeder Dienst eine Schnittstelle (IA, IS) umfasst, um die Applikationen und Dienste, die ein gemeinsames Format aufweisen, zu verbinden.
